# EUROPÄISCHE PATENTANMELDUNG

(11) **EP 2 143 525 A2**
(43) Veröffentlichungstag der Anmeldung: **13.01.2010**
(21) Anmeldenummer: 08021148.5
(22) Anmeldetag: 05.12.2008
(51) Int. Cl.: B23Q 7/05, B23Q 17/24

(54) **Verfahren und Vorrichtung zum Positionieren eines Werkstückes gegenüber einem Werkzeug**

(30) Priorität: 10.07.2008 IT MI20081252
(71) Anmelder: FICEP S.P.A., 21045 Gazzada Schianno, (Varese) (IT)
(72) Erfinder: Blanco, Mario, 10127 Torino (IT)
(74) Vertreter: Mayer, Hans Benno

(57) **Zusammenfassung**

Verfahren zum Positionieren eines Werkstückes gegenüber einem Werkzeug, wobei die Vorschubgeschwindigkeit, die Vorschubrichtung sowie die Länge der durchgeführten Vorschubbewegung für ein Werkstück gemessen wird, und das Werkstück an zwei Anschlagrollen anliegt und über eine Antriebsrolle bewegt wird, die über eine steuerbaren Motor angetrieben wird, der mit einer NC-Kontrolleinrichtung wirkverbunden ist, wobei über eine Messvorrichtung die Vorschubgeschwindigkeit des Werkstückes sowie die Lage des Werkstückes gegenüber einem Werkzeug festgestellt wird.

Das Verfahren wird mittels einer Vorrichtung für die Posizionierung eines Werkstückes gegenüber einem Werkzeug verwirklicht, wobei zwei Anschlagrollen vorgesehen sind, gegen die das Werkstück mit einer Seite anliegt und an der gegenüberliegenden Seite des Werkstückes eine Antriebsrolle zur Anlage kommt, die mit einem steuerbaren Motor wirkverbunden ist und zwischen den zwei Anschlagrollen eine Messvorrichtung angeordnet ist, zum Erfassen der Vorschubgeschwindigkeit des Werkstückes sowie der Lage des Werkstückes gegenüber einem Werkzeug und ferner der Ausgang der Messvorrichtung sowie der Ausgang des steuerbaren Motores mit einer NC-Einrichtung der Maschine in Wirkverbindung stehen.

## Beschreibung

Die vorstehende Erfindung betrifft ein Verfahren sowie eine Vorrichtung zum Positionieren eines Werkstückes gegenüber einem Werkzeug.

Es ist aus dem Stand der Technik bekannt geworden, dass für die Bearbeitung von Metallprofilen oder langen Blechen und

Metallplatten mit beliebiger Dicke und Abmessung, heutzutage numerisch gesteuerte Maschinen zum Einsatz gelangen, die sowohl für die Lageanordnung als auch für die Bearbeitung des Werkstückes Verwendung finden, wobei für einen Bohrvorgang, einen Fräsvorgang oder einen Stanzvorgang sowie zum Schneiden unter Zuhilfenahme eines Sägeblattes oder eines Sägebandes oder andere Vorrichtungen zum Einsatz gelangen, die unter Verwendung einer Wärmequelle auf das Werkstück einwirken.

Um die vorher genannten Arbeitsvorgänge durchführen zu können, ist ein Verfahren bekannt geworden, bei dem das Werkstück durch eine oder mehrere Greiferzangen erfasst wird, wobei diese Greiferzangen mit einem Wagen wirkverbunden find, der auf Führungen verschiebbar gelagert ist und in gesteuerte Bewegung über einen Motor, der mit einem Reduziergetriebe wirkverbunden war, versetzt wird.

Dabei werden Daten bezüglich der Lage, der Vorschubgeschwindigkeit und der Vorschubrichtung des Werkstückes unter Einsatz eines Messinstrumentes, z.B. Encoders oder Revolvers, übertragen, wobei diese Messgeräte mit dem Wagen für den Vorschub des Profiles wirkverbunden sind.

Daraus folgt, dass Parameter, die sich nur auf die Bewegung des Wagens, aber keine Parameter, die sich exakt auf die Lage des zu bearbeitenden Werkstückes, gegenüber dem Werkzeug, zur Verfügung stehen.

Die Genauigkeit der bekannten Anlage ist zufriedenstellend, die bekannte Einrichtung hat aber den Nachteil, dass sie einen erheblichen Platzbedarf aufgrund einer erhebliche Baulänge mit sich bringt. Es sind Führungseinrichtungen für den Vorschubwagen vorgesehen, Einrichtungen, die eine Länge aufweisen, die mindestens der Länge des zu bearbeitenden Werkstückes entspricht.

Neben der Baugröße des Vorschubwagens ist ferner die Baugröße der Steuervorrichtung für die Greiferzangen zu berücksichtigen, mit denen das Ende des zu bearbeitenden Werkstückes erfasst wird und die eine Baulänge aufweisen muß, die wenigstens der Baulänge der Steuervorrichtung entspricht.

Es ist ferner eine Vorrichtung bekannt geworden, bei der Rollen für den Vorschub der Werkstücke vorgesehen sind. Wenigstens eine dieser Rollen ist für den Vorschub des zu bearbeitenden Werkstückes mit einem Motor ausgerüstet. Diese bekannte Vorrichtung weist geringere Abmessungen gegenüber den Abmessungen für den Wagen zur Aufnahme der Greiferzangen auf, es besteht aber der Nachteil, dass diese bekannte Vorrichtung mit weniger Genauigkeit arbeitet, insbesondere wenn die zu bearbeitenden Werkstücke größere Länge aufweisen.

Diese Ungenauigkeit in der Bearbeitung des Werkstückes ist darin zu sehen, dass eine Messeinrichtung in Form eines Encoders oder eines Revolvers zum Einsatz gelangt, die in Übereinstimmung mit der Drehachse der Antriebsrolle oder der Messrolle angeordnet sind.

Beide Vorrichtungen sind aber gezwungen, eine Drehbewegung in eine Linearbewegung unter Einsatz des Wertes π = 3,14 ... einzusetzen.

Wie bekannt ist, stellt der Wert π keinen endlichen Zahlenwert dar und deshalb tritt bei sich drehenden Antriebsvorrichtungen ein Fehler beim Festlegen der Lage, in der sich das zu bearbeitende Werkstück tatsächlich befindet, auf.

Ferner konnte festgestellt werden, dass die Antriebsrollen oder Messrollen einer nicht zu unterschätzenden Abnutzung im Laute der Zeit unterliegen, deshalb ändert sich auch der Umfang dieser Rollen und es treten Fehler bei der Lageanordnung des Werkstückes gegenüber dem Werkzeug auf.

Ferner ist die Abnutzung der Rollen nicht gleichmäßig über den gesamten Umfang der einzelnen Rollen verteilt, da kleinere Profile, die häufiger einer Bearbeitung zu unterziehen sind, eine örtliche Abnutzung der Rollen mit sich bringen und diese Abnutzung nicht gleichmäßig über die gesamte Länge der Rolle erfolgt.

Ferner ist zu berücksichtigen, dass die zum Einsatz gelangenden Rollen üblicherweise mit einer Kördelung versehen sind, um so einen sicheren Griff zwischen der Rolle und dem Profilstück zu gewährleisten, daraus folgt, dass diese Rollen über einen variablen Durchmesser, in Abhängigkeit von einem variablen Anpressdruck arbeiten, mit dem die Rollen gegen das Profilstück angepresst werden.

Es ist Aufgabe der vorstehenden Erfindung die Nachteile des Standes der Technik zu vermeiden und ein Verfahren sowie eine Vorrichtung mit verminderten Abmessungen vorzuschlagen, mit denen es möglich ist, direkt und ohne jeglichen Kontakt mit dem Werkstück die Vorschubrichtung des Werkstückes, die genaue Lage desselben sowie die Vorschubgeschwindigkeit und die Vorschubrichtung des Werkstückes zu messen.

Erfindungsgemäß, wird die genannte Aufgabe durch ein Verfahren zur Lageanordnung eines Werkstückes gegenüber einem Werkzeug dadurch erreicht, dass die Vorschubgeschwindigkeit des Werkstückes, die Vorschubrichtung sowie die Vorschublänge des Werkstückes, welches an zwei Anschlagrollen anliegt, gemessen wird und das Werkstück über eine Antriebsrolle bewegt wird, die von einem steuerbaren Motor angetrieben wird, der mit einer numerischen Steuereinrichtung wirkverbunden ist, und dass mittels einer Messeinrichtung, die mit der NC-Einrichtung der Maschine wirkverbunden ist, die Vorschubgeschwindigkeit des Werkstückes sowie die Lage des Werkstückes gegenüber dem Werkzeug festgestellt wird.

Das Verfahren wird über eine Vorrichtung zur Lageanordnung eines Werkstückes gegenüber einem Werkzeug dadurch verwirklicht, dass Anschlagrollen vorgesehen sind, gegen die das Werkstück mit einer Seite anliegt und das Werkstück mit der gegenüberliegenden Seite mit einer Antriebsrolle in Wirkverbindung steht, die mit einem steuerbaren Motor wirkverbunden ist, und zwischen den zwei Anschlagrollen eine Einrichtung zum Messen der Vorschubgeschwindigkeit des Werkstückes, sowie der Lage des Werkstückes gegenüber einem Werkzeug angeordnet ist und der Ausgang der Messeinrichtung sowie der Ausgang des steuerbaren Motors mit einer NC-Steuereinrichtung der Maschine in Wirkverbindung stehen.

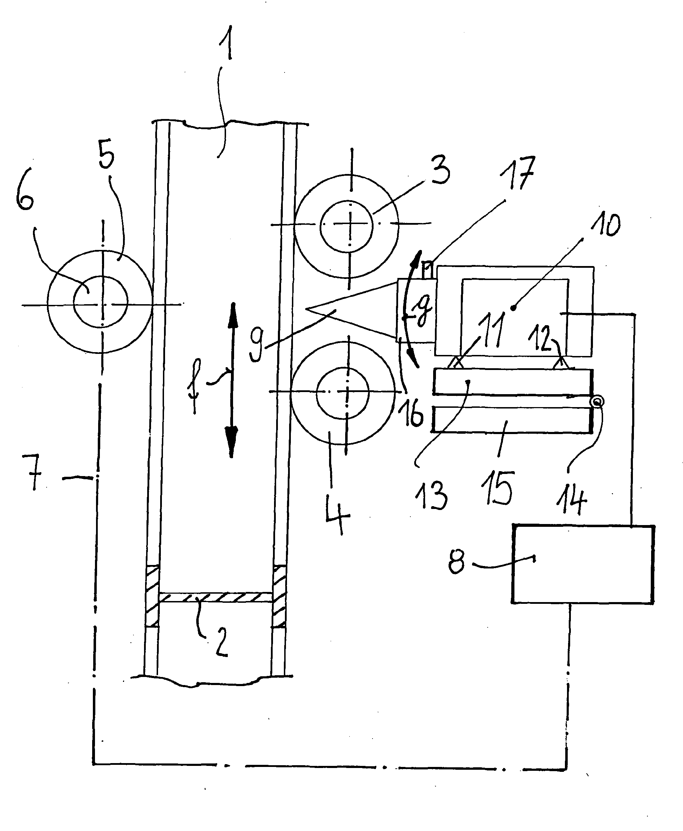

Die Einrichtung gemäß der vorstehenden Erfindung wird nun genauer anhand eines Ausführungsbeispieles beschrieben und schematisch in der beigefügten Zeichnung dargestellt.

Der Zeichnung kann ein Werkstück 1, z.B. eines Doppel-T-Profiles 2 entnommen werden.

Auf einer Seite des Profilstückes sind zwei Anschlagrollen 3 und 4 angeordnet.

Die Vorschubbewegung des Werkstückes 1 erfolgt in gesteuerter Weise und in Richtung des Doppelpfeiles (f), unter Einsatz einer Antriebsrolle 5, die an dem das Profil 1 auf der den Anschlagrollen 3 und 4 gegenüberliegenden Seite anliegt. Die Antriebsrolle 5 ist mit einem steuerbaren Elektromotor 6 wirkverbunden und dieser Motor steht über eine Leitung 7 mit einer NC-Steuereinheit in Wirkverbindung, diese ist Bestandteil der Werkzeugmaschine, die zum Bohren, Fräsen, Stanzen oder Schneiden des Werkstückes 1 Einsatz findet.

Zwischen den Anschlagrollen 3 und 4 ist ein Messkegel 9 angeordnet, der Bestandteil einer bekannten Vorrichtung 10 ist.

Die Vorrichtung 10 erzeugt einen Laserstrahl mit genau definierter Wellenlänge. Über ein Spiegelsystem wird der Teil-Laserstrahl verdoppelt und die zwei so gebildeten Laserstrahlen werden auf das Werkstück zu gesendet, dies mit einem genau festgelegten Auftreffwinkel. Die beiden Laserstrahlen kreuzen sich und bilden gemeinsam ein Raster, welches rechtwinklig zur Ebene des Werkstückes ausgerichtet ist.

Das Licht des Laserstrahls wird bei Vorschub des Werkstückes in der Messebene unterbrochen. Diese Unterbrechung des Laserstrahls wird über einen optischen Sensor festgestellt und in ein elektrisches Signal umgewandelt, dessen Frequenz Informationen hinsichtlich der Vorschubgeschwindigkeit des Werkstückes sowie der vom Werkstück zurückgelegten Strecke liefert. Somit werden von dem Signal-generator zwei Wellenformen mit quadratischer Basis gebildet Signal-generator, wobei die Frequenz direkt proportional zur Geschwindigkeit des sich bewegenden Materiales ist. Somit erfolgt eine Korrektur in Realzeit der Daten, welche die Vorschubgeschwindigkeit, die Lage des Werkstückes und die Vorschubrichtung des Werkstückes definieren. Diese Signale können direkt als Feedback in einer NC-Einrichtung der Maschine verwendet werden, genau wie bei Verwendung einer bekannten Encodervorrichtung.

Es ist bekannt, dass auch andere Hersteller solche Messeinrichtungen mit ähnlichen Merkmalen auf dem Markt anbieten.

Die Vorrichtung 10 ist auf Zapfen 11 und 12 für die Lageanordnung der Vorrichtung montiert. Diese Zapfen sind Bestandteil einer Haltevorrichtung 13, die unter Zuhilfenahme eines Scharniers 14 gegenüber der ortsfest angeordneten Lagerung 15 orientierbar ist.

Dank der orientierbaren Lagerung (Scharnier 14) der Platte 13, welche die Messvorrichtung 10 aufnimmt, besteht die Möglichkeit den Konus, der den Laserstrahl auf das sich in Bewegung befindliche Werkstück 1 sendet und den Rücklauf dieses Laserstrahles empfängt, in seiner Lage auszurichten, wie dies schematisch mit dem Pfeil (g) aufgezeigt ist. Somit kann der Kegel 9 ausgerichtet werden, um zu vermeiden, dass dieser ungünstig durch den rücklaufenden Laserstrahl beeinflusst wird.

Die Vorrichtung 16 zur Lagerung des Kegels 9 kann von der Vorrichtung 10 abgenommen werden, um einen Reinigungsvorgang oder einen Austauschvorgang durchzuführen.

Desweiteren weist die Lagerung einen Anschlussstutzen 17 auf für die Zuführung gereinigter Pressluft, um somit den Kegel 9 bzw. die Lagerung 16 von unerwünschten Ablagerungen, z.B. Staub Spänen und Schmutz, allgemein zu befreien.

## Patentansprüche

1. Vorrichtung für die Lageanordnung eines Werkstückes (1) gegenüber einem Werkzeug, **dadurch gekennzeichnet, dass** die Vorschubgeschwindigkeit, die Vorschubrichtung, sowie die Vorschublänge eines Werkstückes (1) gemessen wird, wobei das Werkstück (1) an Gegenrollen (3, 4) anliegt und über eine Vorschubrolle (5) bewegt wird, wobei diese Vorschubrolle über einen steuerbaren Motor (6) angetrieben wird, der mit einer NC-Einrichtung (8) wirkverbunden ist und die Vorschubgeschwindigkeit des Werkstückes sowie die Lage des Werkstückes gegenüber einem Werkzeug über eine Messvorrichtung (9,10) gemessen wird und der Ausgang der Messvorrichtung (9, 10) sowie der Ausgang des steuerbaren Motores mit einer NC-Kontrolleinrichtung (8) der Maschine in Wirkverbindung stehen.

2. Vorrichtung für die Lageanordnung eines Werkstückes (1) gegenüber einem Werkzeug, **dadurch gekennzeichnet, dass** zwei Anschlagrollen (3, 4) vorgesehen sind, gegen die das Werkstück (1) mit einer Seite anliegt, dass die gegenüberliegende Seite des Werkstückes mit einer Antriebsrolle (5) in Wirkverbindung steht, die mit einem steuerbaren Motor (6) wirkverbunden ist und zwischen den beiden Anschlagrollen (3, 4) eine Vorrichtung (9, 10) zum Messen der Vorschubgeschwindigkeit des Werkstückes (1) und der Lage des Werkstückes (1) gegenüber einem Werkzeug angeordnet ist und der Ausgang der Messvorrichtung (9, 10) sowie der Ausgang des steuerbaren Motores (6) mit einer NC-Steuereinrichtung (8) der Maschine in Wirkverbindung stehen.

3. Vorrichtung für die Lageanordnung eines Werkstückes gegenüber einem Werkzeug, nach Patentanspruch 2, **dadurch gekennzeichnet, dass** die Messeinrichtung (10) von einer Platte (13) aufgenommen wird, die um ein Scharnier (14) orientierbar angeordnet ist.

4. Vorrichtung für die Lageanordnung eines Werkstückes (1) gegenüber einem Werkzeug, unter Zuhilfenahme einer Messvorrichtung (10), die mit der NC-Einrichtung der Maschine wirkverbunden ist, **dadurch gekennzeichnet, dass** ein Laserstrahl mit einer vorbestimmenten Wellenlänge gebildet wird, und der Laserstrahl unter Zuhilfenahme eines Spiegelsystems verdoppelt wird und die zwei somit gebildeten Laserstrahlen gegen das Werkstück mit vorbestimmtem Auftreffwinkel geleitet werden, dass die kreuzenden Laserstrahlen in Wechselwirkung zueinander stehen und ein Raster bilden, das im rechten Winkel zur Ebene des Werkstückes steht, wobei das Licht des Laserstrahls unterbrochen wird, wenn sich das Werkstück entlang einer Messebene bewegt und diese Unterbrechung des Lichtes des Laserstrahles von einem optischen Sensor erkannt wird und in ein elektrisches Signal umgewandelt wird, dessen Frequenz Informationen hinsichtlich der Geschwindigkeit der Lage sowie der Bewegungsrichtung des Werkstückes liefert.

5. Vorrichtung nach Patentanspruch 2, 3 und 4, **dadurch gekennzeichnet, dass** der Kegel (9) und die Lagerung (16) des Kegels durch einen Pressluftstrom zu Reinigungszwecken beeinflussbar sind.
